# EUROPÄISCHE PATENTSCHRIFT

(11) **EP 3 645 916 B1**
(45) Veröffentlichungstag und Bekanntmachung des Hinweises auf die Patenterteilung: **10.03.2021**
(21) Anmeldenummer: 18745824.5
(22) Anmeldetag: 13.06.2018
(51) Int. Cl.: F16H 47/08

(54) **LEISTUNGSÜBERTRAGUNGSVORRICHTUNG UND VERFAHREN ZUM BETREIBEN EINER LEISTUNGSÜBERTRAGUNGSVORRICHTUNG IN EINEM ANTRIEBSSTRANG ZUM DREHZAHLVARIABLEN ANTREIBEN EINER ARBEITSMASCHINE**
POWER TRANSMISSION DEVICE AND METHOD FOR OPERATING A POWER TRANSMISSION DEVICE IN A DRIVE TRAIN FOR DRIVING A WORKING MACHINE AT A VARIABLE SPEED
DISPOSITIF DE TRANSMISSION DE PUISSANCE ET PROCÉDÉ PERMETTANT DE FAIRE FONCTIONNER UN DISPOSITIF DE TRANSMISSION DE PUISSANCE DANS UNE CHAÎNE CINÉMATIQUE POUR L'ENTRAÎNEMENT D'UNE MACHINE DE TRAVAIL À UNE VITESSE DE ROTATION VARIABLE

(30) Priorität: 26.06.2017 DE 102017114063
(43) Veröffentlichungstag der Anmeldung: 06.05.2020
(73) Patentinhaber: Voith Patent GmbH, 89522 Heidenheim (DE)
(72) Erfinder: GRAF, Hartmut, 73660 Urbach (DE)
(74) Vertreter: Voith Patent GmbH - Patentabteilung
(86) Internationale Anmeldenummer: PCT/EP2018/065570
(87) Internationale Veröffentlichungsnummer: WO 2019/001953

(56) Entgegenhaltungen:
- WO-A2-2015/071349
- DE-A1-102006 013 180
- DE-A1-102008 045 584
- DE-A1-102011 018 236
- US-A- 2 997 896
- US-A- 5 299 985

## Beschreibung

Die Erfindung betrifft eine Leistungsübertragungsvorrichtung, im Einzelnen mit den Merkmalen aus dem Oberbegriff von Anspruch 1.

Leistungsübertragungsvorrichtungen in Antriebssträngen zum Antreiben einer Arbeitsmaschine mit variabler Drehzahl sind in unterschiedlichen Ausführungen aus dem Stand der Technik bekannt. Diese werden zwischen einer mit konstanter Drehzahl betreibbaren Antriebsmaschine und der Arbeitsmaschine eingesetzt. Stellvertretend wird auf Voith-Druck cr168de "Pumpen und Kompressoren effizient regeln"; 04/2013 sowie WO2015071349 A1 und WO2012143123 verwiesen.

Eine derartige Leistungsübertragungsvorrichtung umfasst zumindest einen wenigstens mittelbar mit der Antriebsmaschine verbindbaren oder verbundenen Eingang, einen wenigstens mittelbar mit der Arbeitsmaschine verbindbaren oder verbundenen Ausgang, einen hydrodynamischen Drehzahl-/Drehmomentwandler mit zumindest einem Pumpenschaufelrad, einem Turbinenschaufelrad und einem Leitrad, welche einen mit Betriebsmittel befüllbaren Arbeitsraum bilden, wobei wenigstens eines der Schaufelräder Verstellschaufeln oder Verstellschaufelsegmente aufweist und einem Überlagerungsgetriebe. Das Überlagerungsgetriebe umfasst zumindest ein Planetenradgetriebe mit einem Hohlrad, einem Sonnenrad sowie einem Planetenträger mit mehreren Planeten als Elemente des Planetenradgetriebes. Der Eingang der Leistungsübertragungsvorrichtung ist mit dem Pumpenrad des hydrodynamischen Wandlers und einem ersten Element des Planetenradgetriebes wenigstens mittelbar, vorzugsweise direkt verbunden. Das Turbinenrad des hydrodynamischen Wandlers ist mit einem zweiten Element des Planetenradgetriebes wenigstens mittelbar, vorzugsweise direkt verbunden und ein drittes Element des Planetenradgetriebes ist wenigstens mittelbar mit dem Ausgang verbunden oder bildet diesen. Die Leistung wird dadurch in Leistungsverzweigung über einen hydrodynamischen und einen mechanischen Leistungszweig übertragen, wobei die Leistungsanteile im Planetengetriebe summiert werden. Zumindest dem Wandler, vorzugsweise der Leistungsübertragungsvorrichtung ist ein Betriebmittelversorgungs- und/oder Führungssystem zugeordnet und es ist eine Einrichtung zur Befüllung und/oder Entleerung des Wandlers vorgesehen. Der Wandler ist während des Betriebes befüllt.

Eine gattungsgemäße Leistungsübertragungsvorrichtung in kompakter Bauweise mit Ausbildung des Wandlers als Gegenlaufwandler und Planetenradgetriebe ist aus WO2012143123 sowie WO2015071349 A1 vorbekannt. Zur Steuerung des Übertragungsverhaltens des Wandlers ist dieser als Stellwandler mit verstellbaren Schaufeln am Leitrad oder Pumpenrad ausgebildet. Durch diese Maßnahme kann das Übertragungsverhalten über einen vordefinierten Drehzahlbereich eingesteuert werden. Allerdings ist der damit überstreichbare Drehzahlbereich sehr klein. Wird ferner ein derartiges Antriebskonzept für den Antrieb von Arbeitsmaschinen mit hohem Leistungsbedarf eingesetzt, erfolgt das Anfahren unter sehr hoher Last, bedingt durch die Trägheit der Arbeitsmaschine. Dies erfordert sehr hohe erforderliche Einschaltströme der elektrischen Antriebsmaschine, die in starken Netzschwankungen resultieren sowie eine entsprechende Auslegung dieser.

Der Erfindung liegt daher die Aufgabe zugrunde, eine Leistungsübertragungsvorrichtung zum Antreiben einer drehzahlvariablen Arbeitsmaschine und ein Verfahren zu deren Betreiben derart weiterzubilden, dass der Nachteil hoher erforderlicher Einschaltströme bei Verwendung elektrischer Antriebsmaschinen bzw. der hohen erforderlichen Anlaufmomente vermieden wird.

Die erfindungsgemäße Lösung ist durch die Merkmale des Anspruches 1 charakterisiert. Vorteilhafte Ausgestaltungen sind in den Unteransprüchen beschrieben.

Eine Leistungsüberragungsvorrichtung mit einem Eingang zum Verbinden mit einer mit konstanter Drehzahl betreibbaren Antriebsmaschine und zumindest einem Ausgang zum Verbinden mit einer mit variabler Drehzahl betreibbaren Arbeitsmaschine umfasst:
- einen als Gegenlaufwandler ausgebildeten hydrodynamischen Drehzahl-/Drehmomentwandler mit zumindest einem Pumpenschaufelrad, einem Turbinenschaufelrad und einem Leitrad, welche einen mit Betriebsmittel befüllbaren Arbeitsraum bilden;
- ein Überlagerungsgetriebe mit zumindest einem Planetenradgetriebe, umfassend ein Hohlrad, ein Sonnenrad sowie einen Planetenträger mit mehreren Planeten als Elemente des Planetenradgetriebes, wobei der Eingang der Leistungsübertragungsvorrichtung mit dem Pumpenrad des Gegenlaufwandlers und einem ersten Element des Planetenradgetriebes wenigstens mittelbar, vorzugsweise direkt verbunden ist, das Turbinenrad des Gegenlaufwandlers mit einem zweiten Element des Planetenradgetriebes wenigstens mittelbar verbunden ist und ein drittes Element des Planetenradgetriebes wenigstens mittelbar mit dem Ausgang der Leistungsübertragungsvorrichtung verbunden ist oder diesen bildet.
Die Leistungsübertragungsvorrichtung ist erfindungsgemäß dadurch charakterisiert, dass der Gegenlaufwandler entleer bar ist. Ferner ist eine schaltbare Regelkupplung zum Übertragen der Leistung in einem ersten Drehzahlbereich bei entleertem Gegenlaufwandler zwischen dem Eingang und dem Ausgang der Leistungsübertragungsvorrichtung sowie eine Einrichtung zum zumindest mittelbarem Abstützen und/oder Festsetzen des zweiten Elementes des Planetenradgetriebes, insbesondere der Verbindung zwischen dem Turbinenrad des Gegenlaufwandlers und dem zweiten Element des Planetenradgetriebes in diesem ersten Drehzahlbereich vorgesehen. Der Gegenlaufwandler ist in einem zweiten Drehzahlbereich wirksam. Erfindungsgemäß wird zur Verbesserung des Anfahrverhaltens und der Vermeidung hoher Anlaufströme der Antriebsmaschine in der Leistungsübertragungsvorrichtung eine schaltbare Regelkupplung vorgesehen, welche zumindest über einen Teilbereich des Betriebsbereiches außerhalb des Regelbereichs des Gegenlaufwandlers der Leistungsübertragung dient. Diese gelangt in einem ersten Drehzahlbereich, insbesondere während des Anfahrens der Antriebsmaschine zum Einsatz und übernimmt in diesem die Leistungsübertragung zwischen Eingang und Ausgang der Leistungsübertragungsvorrichtung. Die Regelkupplung ermöglicht dabei eine sanfte und stufenlose Einstellung der Drehmomentübertragung gerade während des Anfahrens der Anriebsmaschine, wodurch ein lastfreies Anlaufen möglich ist. Am Ausgang der Leistungsübertragungsvorrichtung sind dadurch Drehzahlen in einem Drehzahlbereich einstellbar, welcher mit dem Regelbereich des Gegenlaufwandlers nicht erreichbar oder nur durch erhebliche Modifikationen an diesem erreichbar sind.

Schaltbar im Sinne der Erfindung bedeutet, dass die Regelkupplung zumindest zwei Betriebszustände aufweist - aktiviert und deaktiviert.

Der Begriff Regelkupplung beinhaltet das Vermögen der Kupplung als Drehzahlwandler zu wirken und die Drehzahl am Kupplungsausgang und damit dem mit diesem wenigstens mittelbar verbundenen Ausgang der Leistungsübertragungsvorrichtung gezielt einzustellen. Die Regelkupplung umfasst dazu zumindest zwei Kupplungsteile, die wenigstens mittelbar miteinander in Wirkverbindung bringbar sind.

Zur Realisierung einer möglichst kompakt bauenden Einheit mit minimaler Bauteilanzahl sind vorzugsweise der Gegenlaufwandler, das Überlagerungsgetriebe und die schaltbare Regelkupplung koaxial zueinander angeordnet. In einer besonders vorteilhaften Weiterbildung sind der Eingang, Ausgang sowie der Gegenlaufwandler, das Überlagerungsgetriebe und die schaltbare Regelkupplung koaxial zueinander angeordnet.

Bezüglich der Anordnung der Regelkupplung besteht eine Mehrzahl von Möglichkeiten. Vorzugsweise wird in der Grundkonfiguration die Anordnung von Gegenlaufwandler und Überlagerungsgetriebe in axialer Richtung vom Eingang zum Ausgang der Leistungsübertragungsvorrichtung betrachtet unmittelbar einander benachbart erfolgen, d.h. frei von einer Zwischenordnung der Regelkupplung. Diese kann dann gemäß einer ersten Ausbildung eingangsseitig, d.h. der Grundkonfiguration aus Gegenlaufwandler und Überlagerungsgetriebe vorgeordnet bzw. auf der vom Überlagerungsgetriebe abgewandten Seite des Gegenlaufwandlers angeordnet sein oder gemäß einer zweiten besonders vorteilhaften Ausbildung der Grundkonfiguration aus Gegenlaufwandler und Überlagerungsgetriebe nachgeordnet und damit auf der dem Gegenlaufwandler abgewandten Seite des Überlagerungsgetriebes angeordnet sein.

In der ersten Ausbildung sind dabei das Pumpenrad des Gegenlaufwandlers und der Ausgangteil der Regelkupplung miteinander verbunden, insbesondere auf einer Welle angeordnet, wobei der Regelkupplung eine Durchtriebseinrichtung zum Überbrücken dieser unter Herstellen der Verbindung zwischen Eingang und Pumpenrad des Gegenlaufwandlers zugeordnet ist. Die erste Ausbildung bietet den Vorteil, dass ausgangsseitig entweder eine direkte Kopplung zwischen Ausgang und Überlagerungsgetriebe erfolgen kann oder aber beliebige weitere Drehzahl-/Drehmomentwandlungseinrichtungen zwischen Überlagerungsgetriebe und Ausgang ohne Einschränkungen angeordnet werden können.

Bei der zweiten Ausbildung ist das Eingangsteil der Regelkupplung mit dem dritten Element des Planetenradgetriebes bzw. Überlagerungsgetriebes verbunden. Der Regelkupplung ist eine Durchtriebseinrichtung zum Überbrücken dieser unter Herstellen der Verbindung zwischen dem dritten Element des Überlagerungsgetriebes und dem Ausgang zugeordnet. Der besondere Vorteil der zweiten Ausbildung besteht darin, dass der Eingangsteil der Regelkupplung aufgrund seiner Kopplung mit dem Ausgang des Überlagerungsgetriebes, insbesondere des Planetenradgetriebes bereits mit höherer Drehzahl angetrieben wird und die Regelkupplung daher hinsichtlich der Auslegung übertragbarer Momente erheblich kleiner dimensioniert werden kann, was neben einer Bauraumersparnis auch in geringeren Kosten resultiert.

In einer Weiterbildung der zweiten Ausbildung ist der Ausgangsteil der Regelkupplung entweder direkt oder über eine Drehzahl-/Drehmomentwandlungseinrichtung insbesondere einen Stirnradzug mit dem Ausgang der Leistungsübertragungsvorrichtung verbunden. Dadurch ist es möglich, zusätzliche Über- und Untersetzungen in die Leistungsübertragungsvorrichtung einzubringen. Ferner kann eine standardisierte Grundkonfiguration aus Gegenlaufwandler und Überlagerungsgetriebe verwendet werden, die dann über die zusätzliche Drehzahl-/Drehmomentwandlungseinrichtung an die konkreten Einsatzerfordernisse anpassbar ist.

Bei beiden Ausbildungen können generell Ein- und Ausgang koaxial oder exzentrisch zueinander angeordnet sein.

Bezüglich der Ausgestaltung der Durchtriebseinrichtung besteht eine Mehrzahl von Möglichkeiten. Vorzugsweise werden mechanische Einrichtungen in Form von schaltbaren Kupplungen zum Einsatz gelangen. Gemäß einer besonders vorteilhaften Ausgestaltung wird die Durchtriebseinrichtung in Funktionskonzentration mit von der Regelkupplung gebildet. Dies ist insbesondere im Fall von mechanischen Regelkupplungen als regelbare Lamellenkupplung denkbar.

Die Durchtriebseinrichtung kann jedoch auch als separate Kupplungseinrichung als Überbrückungskupplung ausgebildet und angeordnet werden.

In einer vorteilhaften und verschleißminimalen Ausbildung ist die Regelkupplung als regelbare hydrodynamische Kupplung, insbesondere hydrodynamische Kupplung mit Füllungssteuerung ausgebildet. Die Füllung kann dabei beispielsweise über Ventileinrichtungen im Zu- und/oder Ablauf zum Arbeitsraum oder sogenannten Schöpfrohren einfach und gezielt eingesteuert werden.

Um das dritte Element des Planetengetriebes antreiben zu können, ist die Einrichtung zum Abstützen und/oder Festsetzen des zweiten Elementes des Planetenradgetriebes, insbesondere der Verbindung zwischen dem Turbinenrad des Gegenlaufwandlers und dem Überlagerungsgetriebe vorgesehen. Diese ist vorzugsweise als Bremseinrichtung, insbesondere hydrodynamischer Retarder ausgebildet, wobei der Rotor direkt mit dem Turbinenrad des Gegenlaufwandlers oder der Verbindung zwischen Turbinenrad und zweitem Element des Planetenradgetriebes verbunden ist. Der Stator kann entweder mit einem gehäusefesten Bauteil oder dem ersten Element des Planetenradgetriebes verbunden sein. Dabei bietet die Ausbildung als hydrodynamischer Retarder den Vorteil, die Abstützkraft frei einstellen zu können.

Eine alternative Ausbildung der Einrichtung besteht in der Ausführung als Kupplungseinrichtung, umfassend zumindest zwei miteinander wenigstens mittelbar in Wirkverbindung bringbare Kupplungsteile. Ein erster Kupplungsteil ist dabei direkt mit dem Turbinenrad des Gegenlaufwandlers oder der Verbindung zwischen Turbinenrad und zweitem Element des Planetenradgetriebes verbunden und der zweite Kupplungsteil mit einem gehäusefesten Bauteil oder dem ersten Element des Planetenradgetriebes.

Um eine besonders kompakte Leistungsübertragungsvorrichtung bereitzustellen, umfasst das Überlagerungsgetriebe nur ein Planetenradgetriebe. Das erste Element des Planetenradgetriebes wird vom Steg, das zweite Element des Planetenradgetriebes vom Sonnenrad und das dritte Element des Planetenradgetriebes vom Hohlrad gebildet.

Zur freien Steuerung des Übertragungsverhaltens ist der Gegenlaufwandler als Stellwandler ausgebildet, umfassend zumindest an einem der Schaufelräder - Pumpenrad, Turbinenrad und/oder Leitrad - Verstellschaufeln oder verstellbare Schaufelsegmente.

Die Erfindung betrifft ferner einen Antriebsstrang mit einer mit konstanter Drehzahl betreibbaren Antriebsmaschine und einer Leistungsübertragungsvorrichtung gemäß einem der Ansprüche 1 bis 12 zum Antreiben einer Arbeitsmaschine mit variabler Drehzahl. Die Drehzahl der Arbeitsmaschine ist dadurch über einen großen Drehzahlbereich frei einstellbar.

Das erfindungsgemäße Verfahren zum Betreiben einer Leistungsübertragungsvorrichtung gemäß einem der Ansprüche 1 bis 12, ist durch folgende Verfahrensschritte charakterisiert:
- Hochfahren der Antriebsmaschine aus dem Stillstand bei entleertem hydrodynamischen Drehzahl-/Drehmomentwandler bis zum Erreichen einer vordefinierten, die Betriebsweise der Antriebsmaschine wenigstens mittelbar charakterisierenden Größe, insbesondere der Nenndrehzahl dieser
- zeitgleich zum Erreichen der vordefinierten, die Betriebsweise der Antriebsmaschine wenigstens mittelbar charakterisierenden Größe, insbesondere der Nenndrehzahl oder zeitlich versetzt nach Erreichen dieser Zuschaltung bzw. Inbetriebnahme der Regelkupplung, insbesondere hydrodynamischen Kupplung und Abstützung oder Festsetzen des zweiten Elements, insbesondere Sonnenrades des Planetenradgetriebes des Überlagerungsgetriebes
- Steuerung des Übertragungsverhaltens der Regelkupplung über einen vordefinierten ersten Drehzahlbereich
- bei Überstreichen des vordefinierten Drehzahlbereiches, Überbrückung der Regelkupplung und Deaktivierung der Einrichtung zur Abstützung und/oder Festsetzung und Befüllung des hydrodynamischen Drehzahl-/Drehmomentwandlers und Antreiben des Turbinenrades
- Antreiben des dritten Elementes des Planetenradgetriebes mit einer Drehzahl, welche aus einer durch das Planetenradgetriebe definierten Überlagerung der Drehzahl des mit der Antriebsmaschine verbundenen ersten Elementes des Planetenradgetriebes und der Drehzahl des mit dem Turbinenrad wenigstens mittelbar verbundenen zweiten Elementes des Planetengetriebes resultiert,
- Steuerung des Übertragungsverhaltens des Gegenlaufwandlers.

Die erfindungsgemäße Lösung wird nachfolgend anhand von Figuren erläutert. Darin ist im Einzelnen Folgendes dargestellt:
- Figur 1a: zeigt eine erste Ausbildung einer Leistungsübertragungsvorrichtung;
- Figuren 1b bis 1d: verdeutlichen anhand von Flussdiagrammen ein Verfahren zum Betreiben einer Leistungsübertragungsvorrichtung gemäß Figur 1a;
- Figur 2: zeigt eine Ausführung gemäß Figur 1a mit Ausbildung der Regelkupplung als hydrodynamische Kupplung;
- Figur 3: zeigt eine Ausführung gemäß Figur 1a mit Ausbildung der Regelkupplung als hydrodynamische Kupplung und Ausbildung der Einrichtung zum Abstützen und/oder Festsetzen als hydrodynamischer Retarder;
- Figur 4: zeigt eine Ausführung gemäß Figur 1a mit Ausbildung der Regelkupplung als hydrodynamische Kupplung und Ausbildung der Einrichtung zum Abstützen und/oder Festsetzen als Kupplungseinrichtung;
- Figur 5: zeigt eine Ausführung gemäß Figur 3 mit Kopplung des Stators des hydrodynamischen Retarders mit einem Element des Planetenradgetriebes;
- Figur 6: zeigt eine Ausführung gemäß Figur 3 mit koaxialer Anordnung von Eingang und Ausgang;
- Figur 7: zeigt eine alternative Anordnung der Regelkupplung auf der vom Überlagerungsgetriebe abgewandten Seite des Gegenlaufwandlers.

Die in den nachfolgenden Figuren dargestellten Leistungsübertragungsvorrichtungen 1 umfassen alle einen Eingang E, einen Ausgang A, einen Gegenlaufwandler 2, ein Überlagerungsgetriebe 3, eine Regelkupplung 20 und eine Einrichtung 25 zum Abstützen und/oder Festsetzen des zweiten Elementes des Planetenradgetriebes 4, insbesondere der Verbindung zwischen Gegenlaufwandler 2 und Überlagerungsgetriebe 3.

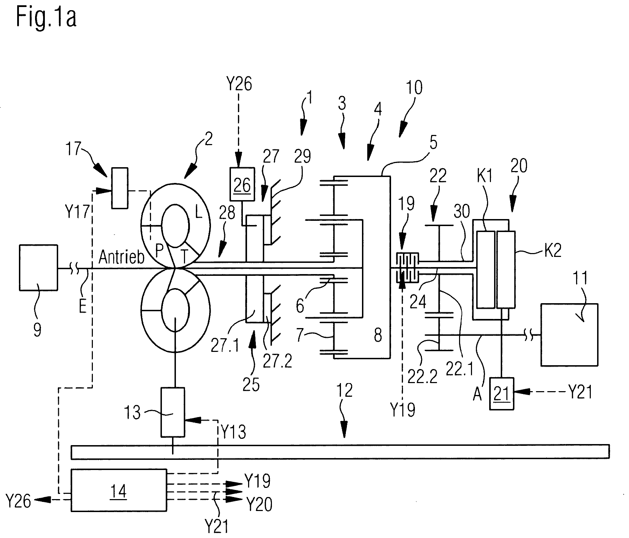

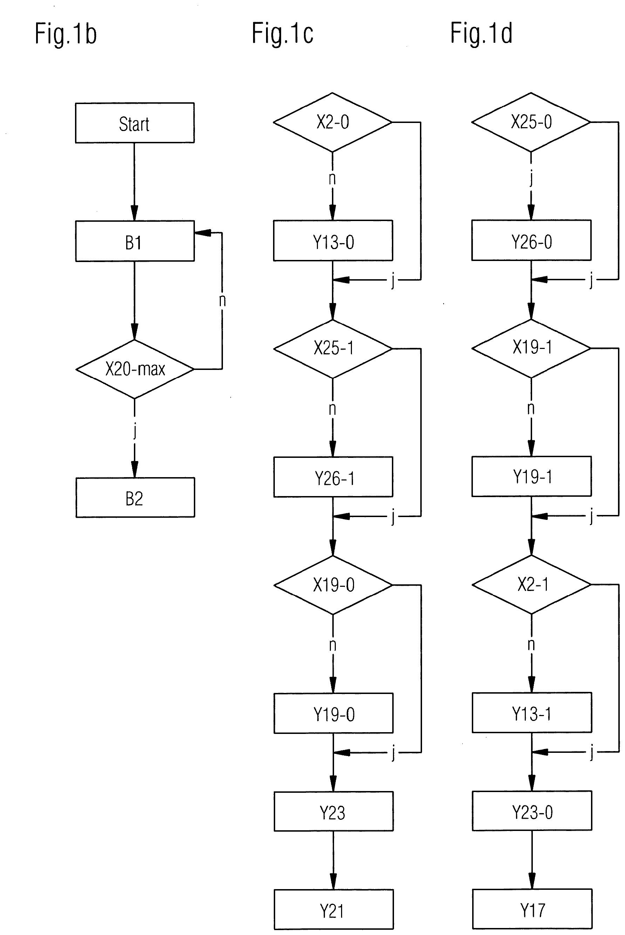

Figur 1a verdeutlicht in schematisiert vereinfachter Darstellung den Grundaufbau einer erfindungsgemäß ausgebildeten Leistungsübertragungsvorrichtung 1 gemäß einer ersten Ausbildung mit exzentrischer Anordnung von Eingang E und Ausgang A. Die Figuren 1b bis 1d verdeutlichen anhand von Flussdiagrammen beispielhaft ein vorteilhaftes Verfahren zum Betreiben einer derartigen Leistungsübertragungsvorrichtung 1. Dabei besteht die Möglichkeit die zeitlichen Abfolgen der Betätigung der einzelnen Komponenten weiter zu modifizieren bzw. anders aufeinander abzustimmen. Allen gemeinsam ist jedoch die Leistungsübertragung in einem ersten Drehzahlbereich über die Regelkupplung 20 und erst in einem zweiten Drehzahlbereich über den Gegenlaufwandler 2.

Die Leistungsübertragungsvorrichtung 1 ist beispielhaft in einem Antriebsstrang 10 zum Antreiben einer, insbesondere drehzahlvariablen Arbeitsmaschine 11 mittels einer Antriebsmaschine 9, insbesondere Antriebsmaschine mit konstanter Drehzahl wiedergegeben. Die Leistungsübertragungsvorrichtung 1 ist im Kraftfluss zwischen der Antriebsmaschine 9 und Arbeitsmaschine 11 angeordnet. Die Figur 1a zeigt beispielhaft eine Grundausführung, welche hinsichtlich der Kopplung zwischen den einzelnen Komponenten sowie durch die Einbindung weiterer Zusatzaggregate modifiziert werden kann.

Die Leistungsübertragungsvorrichtung 1 umfasst zumindest einen wenigstens mittelbar mit der Antriebsmaschine 9 verbundenen Eingang E und einen wenigstens mittelbar mit der Arbeitsmaschine 11 verbindbaren oder verbundenen Ausgang A, einen hydrodynamischen Drehzahl-/Drehmomentwandler, welcher als Gegenlaufwandler 2 ausgebildet ist und ein zumindest ein Planetenradgetriebe 4 umfassendes Überlagerungsgetriebe 3. Die Ein- und Ausgänge E, A sind vorzugsweise als Ein- und Ausgangswellen ausgebildet. Denkbar ist auch die Ausbildung in Form drehmomentübertragender Funktionsteile. Wenigstens mittelbar verbindbar oder verbunden bedeutet dabei entweder direkt oder über weitere zwischengeordnete Komponenten, wobei darunter auch Einrichtungen zur Drehzahl-/Drehmomentwandlung, beispielsweise Stirnradstufen oder weitere Planetenradstufen fallen können.

Das Überlagerungsgetriebe 3 umfasst zumindest ein - in den dargestellten besonders vorteilhaften und kompakten Ausführungen genau ein - Planetenradgetriebe 4 mit zumindest einem Hohlrad 5, einem Sonnenrad 6 und einem, die Planetenräder 7 tragenden Steg 8 als Elemente des Planetenradgetriebes 4. Die Planetenräder 7 sind drehbar am Steg 8 gelagert.

Der hydrodynamische Gegenlaufwandler 2 umfasst zumindest ein Pumpenrad P, ein Turbinenrad T und ein Leitrad L. Der Eingang E ist wenigstens mittelbar, vorzugsweise direkt mit dem Pumpenrad P und einem ersten Element des Planetenradgetriebes 4 verbunden, das Turbinenrad T wenigstens mittelbar, vorzugsweise direkt mit einem zweiten Element des Planetenradgetriebes 4 und der Ausgang A wenigstens mittelbar, vorzugsweise direkt mit einem dritten Element des Planetenradgetriebes 4 verbunden.

Die Anbindung an das Planetenradgetriebe 4 erfolgt hier derart, dass das Pumpenrad P des hydrodynamischen Gegenlaufwandlers 2 mit dem Steg 8 des Planetenradgetriebes 4 und dem Eingang E gekoppelt ist, während das Turbinenrad T mit dem Sonnenrad 6 des Planetenradgetriebes wenigstens mittelbar, vorzugsweise direkt gekoppelt ist. Der Eingang E bzw. die diesen bildende oder mit diesem gekoppelte Welle wird in einer besonders vorteilhaften Ausbildung durch eine als Hohlwelle 18 ausgebildete und die Verbindung 28 zwischen Turbinenrad T und zweitem Element des Planetenradgetriebes 4 (hier dem Sonnenrad 6) bildenden Verbindungswelle zwischen Turbinenrad T und geführt.

Der Gegenlaufwandler 2 kann dabei als einstufiger oder mehrstufiger Wandler, ferner als ein- oder mehrphasiger Wandler ausgebildet sein.

Dem Gegenlaufwandler 2 ist ein Betriebsmittelversorgungs- und/oder Führungssystem 12 zugeordnet. Bei diesem kann es sich um ein lediglich dem Wandler zugeordnetes Betriebsmittelversorgungs- und/oder Führungssystem handeln oder ein mehreren Komponenten der Leistungsübertragungsvorrichtung 1 zugeordnetes System oder aber ein der Leistungsübertragungsvorrichtung 1 oder einer übergeordneten Einheit zugeordnetes System. Vorzugsweise ist diesem zumindest eine Stelleinrichtung 13 zur Befüllung und/oder Entleerung zugeordnet.

Der Gegenlaufwandler 2 ist dadurch charakterisiert, dass das Pumpenrad P und das Turbinenrad T gegensinnig umlaufen. Dabei kann das Turbinenrad T in axialer Richtung neben dem Pumpenrad P angeordnet sein. Denkbar sind auch Ausführungen mit radialer Anordnung. Des Weiteren umfasst der Gegenlaufwandler 2 zumindest ein Leitrad L. Das Leitrad L ist vorzugsweise feststehend (einphasiger Wandler), kann jedoch auch drehbar gelagert sein oder stützt sich über einen Freilauf ab (mehrphasiger Wandler). Im dargestellten Fall ist der Wandler mit einteiligen Hauptgliedern - Pumpenrad P, Turbinenrad T oder Leitrad L - und einstufig ausgebildet. Der Gegenlaufwandler 2 kann auch mehrteilig ausgebildet sein, wobei dann zumindest ein Hauptglied - Pumpenrad P, Turbinenrad T oder Leitrad L - aus mehreren Schaufelkränzen besteht. Mehrteilige Wandler können des Weiteren ein- oder mehrstufig ausgebildet sein. Im letztgenannten Fall besteht zumindest eines der Hauptglieder - Pumpenrad P, Turbinenrad T oder Leitrad L aus mehreren Schaufelkränzen, zwischen denen im Kreislauf ein anderes Hauptglied - Turbinenrad T, Pumpenrad P oder Leitrad L angeordnet ist.

Zur Steuerung und/oder Regelung des über den Gegenlaufwandler 2 übertragbaren Momentes und/oder der Drehzahl ist der Gegenlaufwandler 2 als Stellwandler ausgebildet. Diese Funktion kann unterschiedlich realisiert werden. Denkbar ist die Realisierung über sogenannte Ringschieber, Stellschaufeln, insbesondere Verdrehschaufeln oder Schaufelsegmente oder Einrichtungen zur Einstellung des Füllungsgrades, insbesondere Befüll- und Entleerventile.

In einer vorteilhaften Ausbildung ist der Gegenlaufwandler 2 mit verstellbaren Schaufeln oder Schaufelsegmenten an zumindest einem der Schaufelräder - Pumpenrad P, Turbinenrad T oder Leitrad L ausgeführt, um das Übertragungsverhalten, insbesondere Leistungsübertragungsverhalten sowie Drehzahl zu beeinflussen und zu steuern. Ganz besonders bevorzugt ist der Gegenlaufwandler 2 mit verstellbaren Schaufeln oder Schaufelsegmenten am Pumpenrad P ausgebildet, wie in den Figuren 1a bis 7 beispielhaft wiedergegeben. Die Stelleinrichtung zur Beeinflussung des Übertragungsverhaltens ist mit 17 bezeichnet. Die entsprechenden Stellsignale Y13 bzw. Y17 werden von einer Steuervorrichtung 14 ausgegeben. Es versteht sich, dass die dargestellten Möglichkeiten der Verstellbarkeit von Beschaufelungsbestandteilen beispielhaft sind und auch andere Schaufelräder, insbesondere das Leitrad L jeweils zusätzlich oder alternativ mit Verstellschaufeln ausgestattet sein können.

In einer alternativen Ausführung kann die Funktion der Stelleinrichtung 17 zur Beeinflussung des Übertragungsverhaltens auch von einer Stelleinrichtung 13 zur Befüllung und Entleerung in Funktionskonzentration mit übernommen werden. In diesem Fall wird der Zu- und Ablauf zum/vom Arbeitsraum entsprechend gesteuert.

Über die Einrichtung 17 zur Beeinflussung des Übertragungsverhaltens ist es möglich, dass der Gegenlaufwandler 2 in einem Betriebsbereich, welcher als Wandlerbetrieb bezeichnet wird, Drehzahl- und Drehmoment entsprechend einsteuert. Im Wandlerbetrieb wird jeweils ein Teil der Leistung mechanisch vom Eingang E über das Überlagerungsgetriebe 3 und ein weiterer Teil hydrodynamisch über den Gegenlaufwandler 2 übertragen, wobei die Leistungsteile im Überlagerungsgetriebe 3 wieder zusammengeführt werden. Dabei ist bezogen auf einen Gesamtbetriebsbereich der Leistungsübertragungsvorrichtung 1 der mögliche Drehzahlregelbereich des Gegenlaufwandlers 2 begrenzt. Um den Drehzahlregelbereich der Leistungsübertragungsvorrichtung 1 zu erweitern ist erfindungsgemäß daher eine schaltbare verstellbare Kupplung, insbesondere Regelkupplung 20 vorgesehen. Die Regelkupplung 20 dient in Analogie zum Wandler der Übertragung des Momentes vom Eingang E zum Ausgang A in einem ersten Leistungszweig über einen ersten Drehzahlbereich, während der Gegenlaufwandler 2 in einem zweiten Drehzahlbereich der Leistungsübertragung dient.

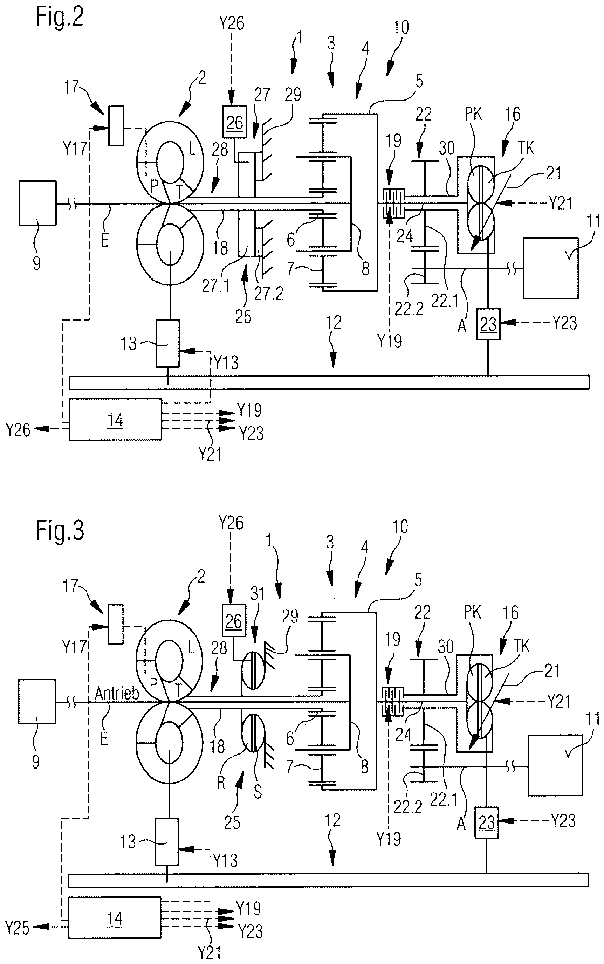

Die Regelkupplung 20 kann beispielhaft als regelbare reibschlüssige Kupplung, insbesondere Lamellenkupplung ausgebildet sein oder aber in einer besonders bevorzugten Ausgestaltung gemäß Figur 2 als schaltbare regelbare hydrodynamische Kupplung 16. Figur 2 verdeutlicht dazu eine Ausbildung gemäß Figur 1a, weshalb für gleiche Elemente gleiche Bezugsziffern verwendet werden, jedoch die Regelkupplung 20 als hydrodynamische Kupplung 16 ausgeführt ist.

Die Regelkupplung 20 umfasst einen ersten Kupplungsteil K1, welcher wenigstens mittelbar mit dem Eingang E verbunden ist. In den Figuren 1a bis 6 erfolgt die Verbindung über das Überlagerungsgetriebe 3, insbesondere durch die direkte Verbindung mit dem dritten Element 5 des Überlagerungsgetriebes 3. Der Kupplungsteil K1 wirkt wenigstens mittelbar, vorzugsweise direkt mit einem zweiten Kupplungsteil K2 zusammen, welcher wiederum wenigstens mittelbar mit dem Ausgang A verbunden ist. Die Kupplungsteile K1 und K2 werden bei Ausbildung als Lamellenkupplung von Kupplungslamellen gebildet. Bei Ausführung der Regelkupplung 20 als regelbare hydrodynamische Kupplung 16 wird das erste Kupplungsteil K1 von einem Pumpenrad PK und das zweite Kupplungsteil K2 vom Turbinenrad TK gebildet, wobei das Pumpenrad PK wenigstens mittelbar mit dem Eingang E, insbesondere einem mit diesem verbundenen Element verbunden ist, während das Turbinenrad TK wenigstens mittelbar, vorzugsweise direkt mit dem Ausgang A der Leistungsübertragungsvorrichtung 1 verbunden ist. In besonders vorteilhafter Ausbildung ist das Pumpenrad PK mit dem dritten Element des Planetengetriebes 4 verbunden, insbesondere einem Bauteil in der Verbindung zwischen drittem Element und Ausgang A, hier direkt mit dem Hohlrad 5.

Um die Leistung im zweiten Drehzahlbereich unter Umgehung der Regelkupplung über den Gegenlaufwandler 16 übertragen zu können, ist die Regelkupplung 20 schaltbar oder wird vorzugsweise überbrückt.

Bezüglich des Aufbaus und der Ausbildung der Regelkupplung als hydrodynamische regelbare Kupplung 16 besteht eine Vielzahl von Möglichkeiten. Bei dieser kann es sich um eine Kupplung mit Füllungsgradsteuerung handeln oder aber eine Kupplung mit Schöpfrohr.

Die Figuren 1a bis 5 verdeutlichen eine Ausbildung mit koaxialer Anordnung von Gegenlaufwandler 2, Überlagerungsgetriebe 3 und Regelkupplung 20. Eingang E und Ausgang A sind exzentrisch angeordnet. Die Regelkupplung 20 ist in besonders vorteilhafter Ausbildung in axialer Richtung betrachtet auf der vom Gegenlaufwandler 2 abgewandten Seite des Überlagerungsgetriebes 3 angeordnet. Durch die Kopplung des ersten Kupplungsteils K1 mit dem Überlagerungsgetriebe 3, insbesondere dem Ausgang dessen, wird im Betriebsbereich der Regelkupplung 20 diese mit höherer Drehzahl angetrieben als bei Anordnung mit direkter Kopplung mit dem Eingang E, wodurch die Regelkupplung hinsichtlich der Auslegung kleiner dimensioniert werden kann.

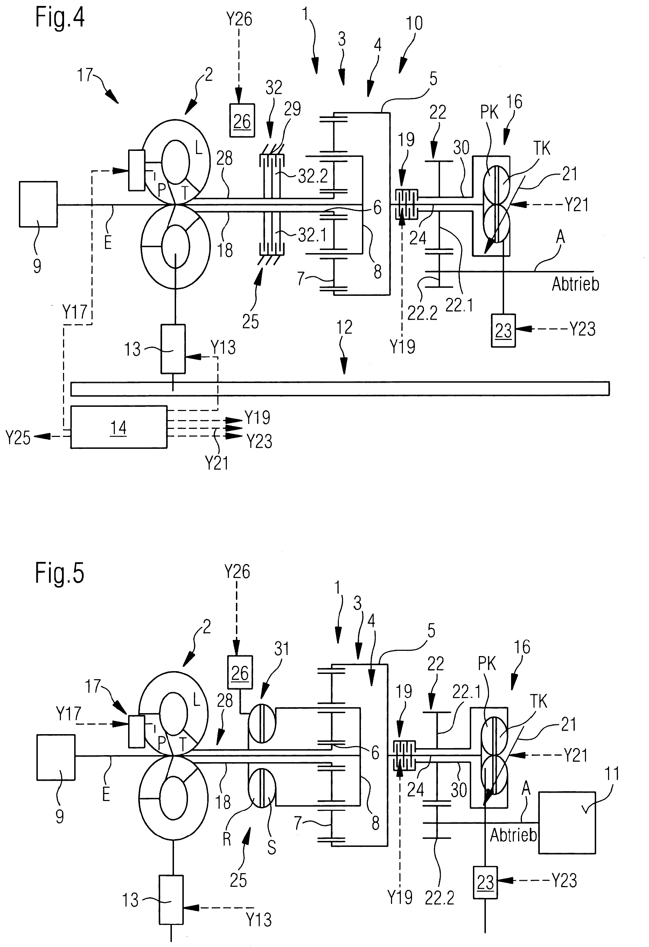

Um über die hydrodynamische Kupplung 16 den Ausgang A antreiben zu können ist es ferner erforderlich, dass mit dem Turbinenrad T verbundene Element des Planetengetriebes 4 abzustützen und damit den im Wandlerbetrieb vorgesehenen hydrodynamischen Leistungszweig, wobei der Gegenlaufwandler 2 im ersten Drehzahlbereich mit Leistungsübertragung über die Regelkupplung 20 entleert ist. Dazu ist eine Einrichtung 25 zur Abstützung und/oder dem Festsetzen des zweiten Elementes des Planetengetriebes 4, insbesondere des Sonnenrades 6 bzw. der Verbindung 28 zwischen diesem und dem Turbinenrad T vorgesehen. Die Abstützung kann dabei an einem ortsfesten Bauteil 29, insbesondere Gehäuseteil erfolgen oder aber gemäß einer weiteren Ausbildung an einem mit Relativdrehzahl und/oder in entgegengesetzter Richtung rotierbaren Bauteil, beispielsweise am Planetenträger 8 des Planetenradgetriebes 4, wie in Figur 5 anhand einer Weiterbildung gemäß Figur 3 wiedergegeben.

In den Ausführungen der Figuren 1a und 2 bis 4 erfolgt die Abstützung gemäß einer ersten Ausbildung an einem gehäuse- oder gestellfesten Bauteil 29. Die Einrichtung 25 umfasst gemäß Figur 1a vorzugsweise eine Bremseinrichtung 27 mit zumindest zwei miteinander in Wirkverbindung bringbaren Bremselementen 27.1 und 27.2. Das Bremselement 27.1 ist drehfest mit der Verbindung zwischen Turbinenrad T und zweitem Element des Planetengetriebes 4, insbesondere Sonnenrad 6 verbunden. Das zweite Element 27.2 ist gestell- oder gehäusefest. Zur Betätigung ist eine Stelleinrichtung 26 vorgesehen. Die Einrichtung 25 kann auch wie in Figur 3 wiedergegeben als hydrodynamischer Retarder 31 oder wie in Figur 4 als Kupplungseinrichtung 32 ausgebildet sein.

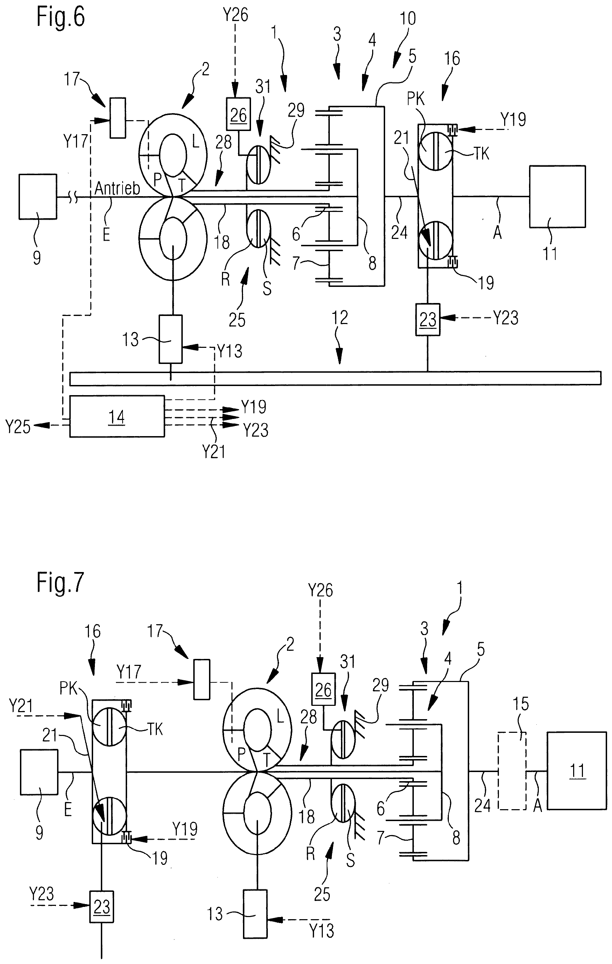

Um einen direkten Durchtrieb zwischen drittem Element, insbesondere Hohlrad 5 des Planetengetriebes 4 und Ausgang A zu ermöglichen, ist ferner eine Durchtriebseinrichtung 19 vorgesehen. Diese kann als separate schaltbare Kupplung zwischen den mit den Kupplungsteilen K1 und K2 verbundenen Wellen oder aber direkt als Überbrückungskupplung zwischen K1 und K2 bzw. bei Ausführung als hydrodynamische regelbare Kupplung 16 zwischen Pumpenrad PK und Turbinenrad TK angeordnet sein. Bei der Ausführung gemäß Figur 1a mit regelbarer Lamellenkupplung kann ferner die Funktion des Durchtriebes 19 mit in die Regelkupplung 20 integriert werden. In den beiden letztgenannten Fällen besteht die Möglichkeit einer koaxialen Anordnung von Eingang und Ausgang, wie beispielsweise in Figur 6 wiedergegeben.

In den Ausführungen gemäß den Figuren 1a bis 5 ist jeweils eine separate schaltbare Kupplung als Durchtriebseinrichtung 19 zur Realisierung des Durchtriebes wiedergegeben. Dazu ist das Hohlrad 5 über eine Welle 24 mit dem Pumpenrad PK verbunden. Das Turbinenrad TK ist mit einer eine mit dem ersten Kupplungsteil K1 bzw. Pumpenrad PK verbundenen Welle über einen Teilbereich ihrer Erstreckung in Längsrichtung zwischen Eingang E und Ausgang A betrachtet umschließenden Hohlwelle 30 verbunden, welche entweder direkt mit dem Ausgang A verbunden ist oder diesen bildet oder aber über eine weitere Drehzahl-/Drehmomentwandlungseinrichtung 22 mit diesem verbunden ist.

Gemäß Figur 1a bis 5 ist der Ausgang A exzentrisch zum Eingang E angeordnet. Der Versatz wird über die Drehzahl-/Drehmomentwandlungseinrichtung 22 realisiert. Diese umfasst im einfachsten Fall zwei miteinander im Eingriff stehende Zahnräder 22.1, 22.2, über welche eine zusätzliche Über- oder Untersetzung realisierbar ist.

Denkbar ist alternativ auch eine koaxiale Anordnung des Ausganges A zur hydrodynamischen Kupplung 20, wie beispielhaft in den Figuren 6 und 7 wiedergegeben. Gemäß der Ausbildung in Figur 6
ist das dritte Element in Form des Hohlrades 6 mit einer Welle 24 integral ausgebildet oder aber verbunden. Ferner mit dieser verbunden ist das Pumpenrad PK. Das Turbinenrad TK ist dann direkt mit dem Ausgang verbunden oder bildet diesen. Die Durchtriebseinrichtung19 ist als Lock up-Kupplung bzw. Überbrückungskupplung direkt zwischen Pumpen- und Turbinenrad PK, TK vorgesehen.

Bei allen Ausführungen sind zur Befüllung und-/oder Entleerung der hydrodynamischen Komponenten ein Betriebsmittelversorgungssystem 12 vorgesehen. Vorzugsweise ist dieses allen hydrodynamischen Komponenten gemeinsam zugeordnet, denkbar ist jedoch auch die Zuordnung nur zu einzelnen hydrodynamischen Komponenten. Jeder hydrodynamischen Komponente sind entsprechende Stelleinrichtungen zumindest zum Befüllen- und/oder Entleeren zugeordnet. Diese sind jeweils mit 13 für den Gegenlaufwandler 2, 26 für die hydrodynamische Bremse und 23 für die hydrodynamische Kupplung 20 bezeichnet. Die Einrichtung 13 zur Beeinflussung des Füllungszustandes bzw. Füllungsgrades umfasst Mittel zur Befüllung/Entleerung, vorzugsweise in Form von Ventileinrichtungen im Zu- und Ablauf des Gegenlaufwandlers 2.

Die Einrichtung 23 zur Befüllung/Entleerung der hydrodynamischen Kupplung 16 kann entweder lediglich die Funktion der Schaltbarkeit durch Befüllung und Entleerung übernehmen, wobei dann eine separate Stelleinrichtung 21 zur Beeinflussung des Übertragungsverhaltens vorzusehen ist oder kann in Funktionskonzentration auch die Stelleinrichtung 21 zur Beeinflussung des Übertragungsverhaltens der Regelkupplung 20 mit umfassen, beispielsweise in Form steuerbarer Ventileinrichtungen und/oder ein sogenanntes Schöpfrohr im Zu- und/oder Ablauf der hydrodynamischen Kupplung 16. Dies gilt in Analogie auch für den hydrodynamischen Retarder 31.

Zur Steuerung der Betriebsweise der Leistungsübertragungsvorrichtung 1 ist eine Steuervorrichtung 14 vorgesehen. Bei der Steuervorrichtung 14 kann es sich beispielhaft um eine der Leistungsübertragungsvorrichtung 1 zugeordnete Steuervorrichtung handeln. Denkbar ist auch eine dem Antriebsstrang 10 oder dem gesamten Strang aus Antriebsstrang 10 und Arbeitsmaschine 11 zugeordnete Steuervorrichtung. Diese ist mit den Stelleinrichtungen zur Ansteuerung der einzelnen Komponenten der Leistungsübertragungsvorrichtung 1 gekoppelt. Dabei handelt es sich vorallem um die Stelleinrichtung 17 zur Beeinflussung des Übertragungsverhaltens des Gegenlaufwandlers 2, die Stelleinrichtung 13 zur Befüllung/Entleerung des Gegenlaufwandlers 2, die Stelleinrichtung zur Betätigung der Regelkupplung 20, insbesondere die Stelleinrichtung 21 zur Einstellung des Übertragungsverhaltens der hydrodynamischen Kupplung und die Stelleinrichtung 23 zur Befüllung/Entleerung der hydrodynamischen Kupplung 16, die Stelleinrichtung 26 zur Betätigung der Einrichtungen 25 sowie die Stelleinrichtung zur Betätigung des Durchtriebs 19. Dabei werden zur Ansteuerung der einzelnen Stelleinrichtungen entsprechende Stellgrößen Y13, Y17, Y19, Y21, Y23, Y26 ausgegeben. Beispielhaft werden nachfolgende Stellgrößen ausgegeben:
- Y13-0 steht für Entleerung, Y13-1 für Befüllung des Gegenlaufwandlers 2.
- Y17 ist die Stellgröße zur Ansteuerung der Stelleinrichtung 17 zur Änderung des Übertragungsverhaltens des Gegenlaufwandlers 2, beispielsweise zur Änderung der Schaufelstellung.
- Y23-0 steht für die Entleerung, Y23-1 für Befüllung der hydrodynamischen Kupplung 16.
- Y20-1 steht für die Betätigung der Regelkupplung 20, insbesondere Lamellenkupplung, Y20-0 für die Deaktivierung.
- Y21 steht für die Einstellung des Übertragungsverhaltens der Regelkupplung 20 bzw. der hydrodynamischen Kupplung 16.
- Y19-1 steht für die Betätigung der Durchtriebseinrichtung 19, Y19-0 für die Deaktivierung.
- Y26-1 steht für die Betätigung der Einrichtung 25 zur Abstützung und/oder Festsetzung des zweiten Elementes des Überlagerungsgetriebes 3, insbesondere des Planetenradgetriebes 4 bzw. der Verbindung zwischen Turbinenrad T und Sonnenrad 6, Y26-0 für die Deaktivierung.

Die Figuren 1b bis 1d verdeutlichen die Betriebsweise der Leistungsübertragungsvorrichtung 1anhand von Flussdiagrammen. Dabei werden gemäß Figur 1b zwei Betriebsbereiche B1 und B2 unterschieden, die jeweils durch die Leistungsübertragung entweder über den Gegenlaufwandler 2 oder die Regelkupplung 20 in einem vordefinierten Drehzahlbereich charakterisiert sind. Dabei steht B1 für die Leistungsübertragung über die Regelkupplung 20 und das Überlagerungsgetriebe 3. B2 steht für die Leistungsübertragung mechanischhydrodynamisch über den Gegenlaufwandler 2 und das Überlagerungsgetriebe 3. Nach dem Start der Leistungsübertragungsvorrichtung erfolgt zuerst die Leistungsübertragung in B1 über die Regelkupplung 20 - entweder rein mechanisch oder bei Ausführung als hydrodynamische Kupplung mechanisch/hydrodynamisch. Die Betriebsweise B2 erfolgt vorzugsweise erst nach Ausschöpfung des Regelbereiches der Regelkupplung 20, d.h. wenn X20-max erreicht ist.

Die Figur 1c verdeutlicht dabei beispielhaft anhand eines Flussdiagrammes das Verfahren zum Betreiben der Leistungsübertragungsvorrichtung im Betriebsbereich B1 gemäß Figur 1b. Dabei wird bei Inbetriebnahme des Antriebsstranges 10 und Hochfahren der Antriebsmaschine 11 zuerst geprüft, ob der Gegenlaufwandler 2 entleert ist. Ist dies nicht der Fall, wird die Einrichtung 13 angesteuert, hier durch Vorgabe einer Stellgröße Y13-0, welche für die Entleerung des Gegenlaufwandlers 2 steht. Danach wird geprüft, ob das zweite Element, insbesondere das Sonnenrad 6 des Planetenradgetriebes 4 abgestützt ist. Dazu wird die Funktionsstellung der Einrichtung 25 zum Abstützen und/oder Festsetzen überprüft. Ist diese nicht aktiviert, wird die Stelleinrichtung 26 angesteuert, indem eine Stellgröße Y26-1 ausgegeben wird. Des Weiteren wird der Funktionszustand der Durchtriebseinrichtung 19 geprüft. Ist diese aktiviert wird diese durch Ansteuerung der Stelleinrichtung 19 und Y19-0 deaktiviert. Die Regelkupplung 20 wird aktiviert und über Y21 das Übertragungsverhalten eingesteuert. Bei Ausbildung der Regelkupplung als hydrodynamische Kupplung 16 wird diese befüllt durch Vorgabe eines Füllsignals Y23. Das Übertragungsverhalten wird durch Vorgabe einer Stellgröße Y21 zur Ansteuerung einer Stelleinrichtung zur Beeinflussung des Übertragungsverhaltens der hydrodynamischen Kupplung, beispielsweise eines Schöpfrohres zur Einstellung des Füllungsgrades beeinflusst.

Ist der Regelbereich der Regelkupplung 20, insbesondere der hydrodynamischen Kupplung 16 ausgeschöpft, wird diese deaktiviert und der Gegenlaufwandler 2 in Betrieb genommen, wie beispielhaft in Figur 1d wiedergegeben. Dazu wird die Einrichtung 25 deaktiviert durch Vorgabe der entsprechenden Stellgröße Y26-0, die Einrichtung 19 wird aktiviert durch Vorgabe Y19-1 und der Gegenlaufwandler 2 befüllt durch Vorgabe eines Stellsignals Y13-1 zur Befüllung des Gegenlaufwandlers 2. Das Übertragungsverhalten des Gegenlaufwandlers 2 wird über die Stelleinrichtung 17 eingesteuert. Zusätzlich kann, muss jedoch nicht zwingend, die hydrodynamische Kupplung 16 entleert werden. Dies erfolgt durch Ansteuerung der Stelleinrichtung 23 durch Vorgabe eines entsprechenden Entleersignals Y23-0.

Das Grundverfahren ist durch folgende Verfahrensschritte charakterisiert:
- Hochfahren der Antriebsmaschine aus dem Stillstand bei entleertem hydrodynamischen Drehzahl-/Drehmomentwandler bis zum Erreichen einer vordefinierten, die Betriebsweise der Antriebsmaschine wenigstens mittelbar charakterisierenden Größe, insbesondere der Nenndrehzahl dieser
- zeitgleich zum Erreichen der vordefinierten, die Betriebsweise der Antriebsmaschine wenigstens mittelbar charakterisierenden Größe, insbesondere der Nenndrehzahl oder zeitlich versetzt nach Erreichen dieser Zuschaltung bzw. Inbetriebnahme der Regelkupplung, insbesondere hydrodynamischen Kupplung und Abstützung oder Festsetzen des zweiten Elements, insbesondere Sonnenrades des Planetenradgetriebes des Überlagerungsgetriebes
- Steuerung des Übertragungsverhaltens der Regelkupplung über einen vordefinierten Drehzahlbereich
- bei Überstreichen des vordefinierten Drehzahlbereiches, Überbrückung der Regelkupplung und Deaktivierung der Einrichtung zur Abstützung und/oder Festsetzung und Befüllung des hydrodynamischen Drehzahl-/Drehmomentwandlers und Antreiben des Turbinenrades
- Antreiben des dritten Elementes des Planetenradgetriebes mit einer Drehzahl, welche aus einer durch das Planetenradgetriebe definierten Überlagerung der Drehzahl des mit der Antriebsmaschine verbundenen ersten Elementes des Planetenradgetriebes und der Drehzahl des mit dem Turbinenrad wenigstens mittelbar verbundenen zweiten Elementes des Planetengetriebes resultiert
- Steuerung des Übertragungsverhaltens des Gegenlaufwandlers.

Die Figur 7 zeigt eine alternative Anordnung der hydrodynamischen Kupplung 16 zwischen Eingang E und Gegenlaufwandler 2 in axialer Richtung betrachtet und damit auf der vom Überlagerungsgetriebe 3 abgewandten Seite des Gegenlaufwandlers 2. In diesem Fall ist die direkte Verbindung zwischen Überlagerungsgetriebe 3 und Ausgang A möglich und damit die koaxiale Anordnung von Eingang E und Ausgang A bei gleichzeitiger koaxialer Anordnung von Kupplung 16, Gegenlaufwandler 2 und Überlagerungsgetriebe 3.

Denkbar ist jedoch auch die Zwischenordnung weiterer Drehzahl-/Drehmomentwandlungseinrichtungen 15 zwischen Überlagerungsgetriebe 3 und Ausgang A, hier mit 15 bezeichnet und mittels unterbrochener Linie angedeutet.

### Bezugszeichenliste

- 1: Leistungsübertragungsvorrichtung
- 2: Gegenlaufwandler
- 3: Überlagerungsgetriebe
- 4: Planetenradgetriebe
- 5: Hohlrad
- 6: Sonnenrad
- 7: Planetenräder
- 8: Steg, Planetenträger
- 9: Antriebsmaschine, insbesondere Elektromotor
- 10: Antriebsstrang
- 11: Arbeitsmaschine
- 12: Betriebsmittelversorgungs-/Führungssystem
- 13: Einrichtung zur Befüllung und Entleerung
- 14: Steuervorrichtung
- 15: Drehzahl-/Drehmomentwandlungseinrichtung
- 16: regelbare hydrodynamische Kupplung
- 17: Stelleinrichtung zur Beeinflussung des Übertragungsverhaltens des Gegenlaufwandlers
- 18: Hohlwelle
- 19: Durchtriebseinrichtung
- 20: Regelkupplung
- 21: Stelleinrichtung; Schöpfrohr
- 22: Drehzahl-/Drehmomentwandlungseinrichtung
- 22.1, 22.2: Zahnräder
- 23: Stelleinrichtungen zumindest zum Befüllen- und/oder Entleeren der hydrodynamischen Kupplung
- 24: Welle
- 25: Einrichtung zum Abstützen und/oder Festsetzen
- 26: Stelleinrichtung
- 28: Verbindung zwischen Turbinenrad und zweitem Element des Planetengetriebes
- 29: gehäusefestes Bauteil
- 30: Hohlwelle
- 31: hydrodynamischer Retarder
- 32: Kupplungseinrichtung
- A: Ausgang, Ausgangswelle
- E: Eingang, Eingangswelle
- P: Pumpenrad (Wandler)
- T: Turbinenrad (Wandler)
- L: Leitrad
- K1: erstes Kupplungsteil
- K2: zweites Kupplungsteil
- PK: Pumpenrad Kupplung
- TK: Turbinenrad Kupplung
- R: Rotor
- S: Stator
- B1, B2: Betriebsbereiche
- Y13, Y17, Y19, Y20, Y21, Y23, Y25,: Stellgrößen
- X2, X19, X25, X16: Istgrößen

## Patentansprüche

1. Leistungsüberragungsvorrichtung (1) mit einem Eingang (E) zum Verbinden mit einer mit konstanter Drehzahl betreibbaren Antriebsmaschine und zumindest einem Ausgang (A) zum Verbinden mit einer mit variabler Drehzahl betreibbaren Arbeitsmaschine (9) umfassend:
- einen als Gegenlaufwandler (2) ausgebildeten hydrodynamischen Drehzahl-/Drehmomentwandler mit zumindest einem Pumpenschaufelrad (P), einem Turbinenschaufelrad (T) und einem Leitrad (L), welche einen mit Betriebsmittel befüllbaren Arbeitsraum bilden;
- ein Überlagerungsgetriebe (3) mit zumindest einem Planetenradgetriebe (4), umfassend ein Hohlrad (5), ein Sonnenrad (6) sowie einen Planetenträger (8) mit mehreren Planeten (7) als Elemente des Planetenradgetriebes (4), wobei
der Eingang (E) der Leistungsübertragungsvorrichtung (1) mit dem Pumpenrad (P) des Gegenlaufwandlers (2) und einem ersten Element des Planetenradgetriebes (4) wenigstens mittelbar, vorzugsweise direkt verbunden ist, das Turbinenrad (T) des Gegenlaufwandlers (2) mit einem zweiten Element des Planetenradgetriebes (4) wenigstens mittelbar, vorzugsweise direkt verbunden ist und ein drittes Element des Planetenradgetriebes (4) wenigstens mittelbar mit dem Ausgang (A) der Leistungsübertragungsvorrichtung (1) verbunden ist oder diesen bildet;
**gekennzeichnet durch die folgenden Merkmale:**
- der Gegenlaufwandler (2) ist entleerbar;
- mit einer schaltbaren Regelkupplung (20, 16) zum Übertragen der Leistung in einem ersten Drehzahlbereich bei entleertem Gegenlaufwandler (2) zwischen dem Eingang (E) und dem Ausgang (A) der Leistungsübertragungsvorrichtung (1);
- mit einer Einrichtung (25) zum zumindest mittelbarem Abstützen und/oder Festsetzen des zweiten Elementes des Planetenradgetriebes (4), insbesondere der Verbindung (28) zwischen dem Turbinenrad (T) des Gegenlaufwandlers (2) und dem zweitem Element des Planetenradgetriebes (4) in diesem ersten Drehzahlbereich.

2. Leistungsübertragungsvorrichtung (1) nach Anspruch 1,
**dadurch gekennzeichnet,**
**dass** der Gegenlaufwandler (2), das Überlagerungsgetriebe (3) und die schaltbare Regelkupplung (20, 16) koaxial zueinander angeordnet sind.

3. Leistungsübertragungsvorrichtung (1) nach einem der Ansprüche 1 bis 2,
**dadurch gekennzeichnet,**
**dass** in axialer Richtung zwischen Eingang (E) und Ausgang (A) der Leistungsübertragungsvorrichtung (1) betrachtet der Gegenlaufwandler (2) dem Überlagerungsgetriebe (3) räumlich vorgeordnet ist und
die schaltbare Regelkupplung (20, 16) auf der vom Überlagerungsgetriebe (3) abgewandten Seite des Gegenlaufwandlers (2) angeordnet ist, wobei der Regelkupplung (20) eine Durchtriebseinrichtung (19) zum Überbrücken dieser unter Herstellen der Verbindung zwischen Eingang (E) und Pumpenrad (P) des Gegenlaufwandlers (2) zugeordnet ist.

4. Leistungsübertragungsvorrichtung (1) nach einem der Ansprüche 1 bis 2,
**dadurch gekennzeichnet,**
**dass** in axialer Richtung zwischen Eingang (E) und Ausgang (A) der Leistungsübertragungsvorrichtung (1) betrachtet der Gegenlaufwandler (2) dem Überlagerungsgetriebe (3) räumlich vorgeordnet ist und die Regelkupplung (20, 16) auf der dem Gegenlaufwandler (2) abgewandten Seite des Überlagerungsgetriebes (3) angeordnet ist, wobei der Eingangsteil (K1) der Regelkupplung (20, 16) mit dem dritten Element des Überlagerungsgetriebes (3) verbunden ist und der Regelkupplung (20) eine Durchtriebseinrichtung (19) zum Überbrücken dieser unter Herstellen der Verbindung zwischen dem dritten Element des Überlagerungsgetriebes (3) und dem Ausgang (A) zugeordnet ist.

5. Leistungsübertragungsvorrichtung (1) nach Anspruch 4,
**dadurch gekennzeichnet,**
**dass** der Ausgangsteil (K2) der Regelkupplung (20, 16) über eine Drehzahl-/Drehmomentwandlungseinrichtung (22), insbesondere einen Stirnradzug mit dem Ausgang der Leistungsübertragungsvorrichtung (1) verbunden ist.

6. Leistungsübertragungsvorrichtung (1) nach einem der Ansprüche 2 bis 5,
**dadurch gekennzeichnet,**
**dass** die Durchtriebseinrichtung (19) in Funktionskonzentration mit von der Regelkupplung (20, 16) gebildet ist.

7. Leistungsübertragungsvorrichtung (1) nach einem der Ansprüche 1 bis 6,
**dadurch gekennzeichnet,**
**dass** die Regelkupplung als regelbare Lamellenkupplung ausgebildet ist.

8. Leistungsübertragungsvorrichtung (1) nach einem der Ansprüche 1 bis 6,
**dadurch gekennzeichnet,**
**dass** die Regelkupplung (20) als regelbare hydrodynamische Kupplung (16), insbesondere hydrodynamische Kupplung mit Füllungssteuerung ausgebildet ist.

9. Leistungsübertragungsvorrichtung (1) nach einem der Ansprüche 1 bis 8,
**dadurch gekennzeichnet,**
**dass** die Einrichtung (25) zum Abstützen und/oder Festsetzen des zweiten Elementes des Planetenradgetriebes (4), insbesondere der Verbindung (28) zwischen dem Turbinenrad (T) des Gegenlaufwandlers (2) und dem Überlagerungsgetriebe (3) als Bremseinrichtung, insbesondere hydrodynamischer Retarder (31) ausgebildet ist, wobei der Rotor (R) direkt mit dem Turbinenrad (T) des Gegenlaufwandlers (2) oder der Verbindung (28) zwischen Turbinenrad (T) und zweitem Element des Planetenradgetriebes (4) verbunden ist und der Stator (S) mit einem gehäusefesten Bauteil oder dem ersten Element des Planetenradgetriebes (4) verbunden ist.

10. Leistungsübertragungsvorrichtung (1) nach einem der Ansprüche 1 bis 8,
**dadurch gekennzeichnet,**
**dass** die Einrichtung (25) zum Abstützen und/oder Festsetzen des zweiten Elementes des Planetenradgetriebes (4), insbesondere der Verbindung (28) zwischen dem Turbinenrad (T) des Gegenlaufwandlers (2) und dem Überlagerungsgetriebe (3) als Kupplungseinrichtung (32), umfassend zumindest zwei miteinander wenigstens mittelbar in Wirkverbindung bringbare Kupplungsteile (K1, K2) ausgebildet ist, wobei ein erster Kupplungsteil 32.1 direkt mit dem Turbinenrad (T) des Gegenlaufwandlers (2) oder der Verbindung (28) zwischen Turbinenrad (T) und zweitem Element des Planetenradgetriebes (4) verbunden ist und der zweite Kupplungsteil (K2) mit einem gehäusefesten Bauteil oder dem ersten Element des Planetenradgetriebes (4) verbunden ist.

11. Leistungsübertragungsvorrichtung (1) nach einem der Ansprüche 1 bis 10,
**dadurch gekennzeichnet,**
**dass** das Überlagerungsgetriebe (3) nur ein Planetenradgetriebe (4) umfasst und das erste Element des Planetenradgetriebes (4) vom Steg (8), das zweite Element des Planetenradgetriebes (4) vom Sonnenrad (6) und das dritte Element des Planetenradgetriebes (4) vom Hohlrad (5) gebildet ist.

12. Leistungsübertragungsvorrichtung (1) nach einem der Ansprüche 1 bis 11,
**dadurch gekennzeichnet,**
**dass** der Gegenlaufwandler (2) als Stellwandler ausgebildet ist, umfassen zumindest an einem der Schaufelräder - Pumpenrad, Turbinenrad und/oder Leitrad Verstellschaufeln oder verstellbare Schaufelsegmente.

13. Antriebsstrang (10) mit einer mit konstanter Drehzahl betreibbaren Antriebsmaschine (9) und einer Leistungsübertragungsvorrichtung (1) gemäß einem der Ansprüche 1 bis 12 zum Antreiben einer Arbeitsmaschine (11) mit variabler Drehzahl.

14. Verfahren zum Betreiben einer Leistungsübertragungsvorrichtung (1) gemäß einem der Ansprüche 1 bis 12, mit den folgenden Verfahrensschritten:
- Hochfahren der Antriebsmaschine aus dem Stillstand bei entleertem hydrodynamischen Drehzahl-/Drehmomentwandler bis zum Erreichen einer vordefinierten, die Betriebsweise der Antriebsmaschine wenigstens mittelbar charakterisierenden Größe, insbesondere der Nenndrehzahl dieser
- zeitgleich zum Erreichen der vordefinierten, die Betriebsweise der Antriebsmaschine wenigstens mittelbar charakterisierenden Größe, insbesondere der Nenndrehzahl oder zeitlich versetzt nach Erreichen dieser Zuschaltung bzw. Inbetriebnahme der Regelkupplung, insbesondere hydrodynamischen Kupplung und Abstützung oder Festsetzen des zweiten Elements, insbesondere Sonnenrades des Planetenradgetriebes des Überlagerungsgetriebes
- Steuerung des Übertragungsverhaltens der Regelkupplung über einen vordefinierten ersten Drehzahlbereich
- bei Ausschöpfung des vordefinierten Drehzahlbereiches, Überbrückung der Regelkupplung und Deaktivierung der Einrichtung zur Abstützung und/oder Festsetzung und Befüllung des hydrodynamischen Drehzahl-/Drehmomentwandlers und Antreiben des Turbinenrades
- Antreiben des dritten Elementes des Planetenradgetriebes mit einer Drehzahl, welche aus einer durch das Planetenradgetriebe definierten Überlagerung der Drehzahl des mit der Antriebsmaschine verbundenen ersten Elementes des Planetenradgetriebes und der Drehzahl des mit dem Turbinenrad wenigstens mittelbar verbundenen zweiten Elementes des Planetengetriebes resultiert,
- Steuerung des Übertragungsverhaltens des Gegenlaufwandlers.

## Claims

1. Power transmission apparatus (1) with an input (E) for connecting to a drive unit which can be operated at a constant rotational speed, and at least one output (A) for connecting to a mobile machine (9) which can be operated at a variable rotational speed, comprising:
- a hydrodynamic rotational speed/torque converter which is configured as a counter-rotating converter (2) with at least one pump impeller (P), a turbine impeller (T) and a diffuser (L) which form a working space which can be filled with operating medium;
- a superimposition transmission (3) with at least one planetary gear mechanism (4), comprising an internal gear (5), a sun gear (6) and a planetary carrier (8) with a plurality of planets (7) as elements of the planetary gear mechanism (4),
the input (E) of the power transmission apparatus (1) being connected at least indirectly, preferably directly, to the pump impeller (P) of the counter-rotating converter (2) and to a first element of the planetary gear mechanism (4), the turbine impeller (T) of the counter-rotating converter (2) being connected at least indirectly, preferably directly, to a second element of the planetary gear mechanism (4), and a third element of the planetary gear mechanism (4) being connected at least indirectly to the output (A) of the power transmission apparatus (1) or forming the said output (A);
**characterized by** the following features:
- the counter-rotating converter (2) can be emptied;
- with a switchable variable-speed coupling (20, 16) for transmitting the power in a first rotational speed range in the case of an emptied counter-rotating converter (2) between the input (E) and the output (A) of the power transmission apparatus (1);
- with a device (25) for the at least indirect supporting and/or fixing of the second element of the planetary gear mechanism (4), in particular the connection (28) between the turbine impeller (T) of the counter-rotating converter (2) and the second element of the planetary gear mechanism (4) in the said first rotational speed range.

2. Power transmission apparatus (1) according to Claim 1, **characterized in that** the counter-rotating converter (2), the superimposition transmission (3) and the switchable variable-speed coupling (20, 16) are arranged coaxially with respect to one another.

3. Power transmission apparatus (1) according to either of Claims 1 and 2, **characterized in that**, as viewed in the axial direction between the input (E) and the output (A) of the power transmission apparatus (1), the counter-rotating converter (2) is arranged spatially in front of the superimposition transmission (3), and the switchable variable-speed coupling (20, 16) is arranged on that side of the counter-rotating converter (2) which faces away from the superimposition transmission (3), the variable-speed coupling (20) being assigned a through-connected drive device (19) for bridging it with the establishing of the connection between the input (E) and the pump impeller (P) of the counter-rotating converter (2).

4. Power transmission apparatus (1) according to either of Claims 1 and 2, **characterized in that**, as viewed in the axial direction between the input (E) and the output (A) of the power transmission apparatus (1), the counter-rotating converter (2) is arranged spatially in front of the transmission apparatus (3), and the variable-speed coupling (20, 16) is arranged on that side of the superimposition transmission (3) which faces away from the counter-rotating converter (2), the input part (K1) of the variable-speed coupling (20, 16) being connected to the third element of the superimposition transmission (3), and the variable-speed coupling (20) being assigned a through-connected drive device (19) for bridging it with the establishing of the connection between the third element of the superimposition transmission (3) and the output (A).

5. Power transmission apparatus (1) according to Claim 4, **characterized in that** the output part (K2) of the variable-speed coupling (20, 16) is connected via a rotational speed/torque conversion device (22), in particular a spur gear train, to the output of the power transmission apparatus (1).

6. Power transmission apparatus (1) according to one of Claims 2 to 5, **characterized in that** the through-connected drive device (19) is also formed in a functional concentration by the variable-speed coupling (20, 16).

7. Power transmission apparatus (1) according to one of Claims 1 to 6, **characterized in that** the variable-speed coupling is configured as a controllable multiple disc clutch.

8. Power transmission apparatus (1) according to one of Claims 1 to 6, **characterized in that** the variable-speed coupling (20) is configured as a controllable hydrodynamic coupling (16), in particular a hydrodynamic coupling with a fill-control means.

9. Power transmission apparatus (1) according to one of Claims 1 to 8, **characterized in that** the device (25) for supporting and/or fixing the second element of the planetary gear mechanism (4), in particular the connection (28) between the turbine impeller (T) of the counter-rotating converter (2) and the superimposition transmission (3) is configured as a braking device, in particular a hydrodynamic retarder (31), the rotor (R) being connected directly to the turbine impeller (T) of the counter-rotating converter (2) or to the connection (28) between the turbine impeller (T) and the second element of the planetary gear mechanism (4), and the stator (S) being connected to a component which is fixed to the housing, or to the first element of the planetary gear mechanism (4).

10. Power transmission apparatus (1) according to one of Claims 1 to 8, **characterized in that** the device (25) for supporting and/or fixing the second element of the planetary gear mechanism (4), in particular the connection (28) between the turbine impeller (T) of the counter-rotating converter (2) and the superimposition transmission (3), is configured as a coupling device (32), comprising at least two coupling parts (K1, K2) which can be brought into operative connection with one another at least indirectly, a first coupling part 32.1 being connected directly to the turbine impeller (T) of the counter-rotating converter (2) or to the connection (28) between the turbine impeller (T) and the second element of the planetary gear mechanism (4), and the second coupling part (K2) being connected to a component which is fixed to the housing, or to the first element of the planetary gear mechanism (4).

11. Power transmission apparatus (1) according to one of Claims 1 to 10, **characterized in that** the superimposition transmission (3) comprises only one planetary gear mechanism (4), and the first element of the planetary gear mechanism (4) is formed by the spider (8), the second element of the planetary gear mechanism (4) is formed by the sun gear (6), and the third element of the planetary gear mechanism (4) is formed by the internal gear (5).

12. Power transmission apparatus (1) according to one of Claims 1 to 11, **characterized in that** the counter-rotating converter (2) is configured as an adjusting converter, comprising adjustable blades or adjustable blades segments on at least one of the impellers - the pump impeller, the turbine impeller and/or the diffuser.

13. Drive train (10) with a drive unit (9) which can be operated at a constant rotational speed and with a power transmission device (1) according to one of Claims 1 to 12 for driving a mobile machine (11) at a variable rotational speed.

14. Method for operating a power transmission device (1) according to one of Claims 1 to 12, with the following method steps:
- starting up of the drive unit from a standstill in the case of an emptied hydrodynamic rotational speed/torque converter until a predefined variable which characterizes the method of operation of the drive unit at least indirectly is reached, in particular the nominal rotational speed of the said drive machine,
- at the same time as the predefined variable which characterizes the method of operation of the drive unit at least indirectly, in particular the nominal rotational speed, is reached, or offset temporarily after the said variable is reached, switching on or putting into operation of the variable-speed coupling, in particular the hydrodynamic coupling, and supporting or fixing of the second element, in particular the sun gear of the planetary gear mechanism of the superimposition transmission,
- controlling of the transmission behaviour of the variable-speed coupling over a predefined first rotational speed range,
- when the predefined rotational speed range has been exhausted, bridging of the variable-speed coupling and deactivating of the device for supporting and/or fixing and filling the hydrodynamic rotational speed/torque converter, and driving of the turbine impeller,
- driving of the third element of the planetary gear mechanism at a rotational speed which results from a superimposition, defined by way of the planetary gear mechanism, of the rotational speed of that first element of the planetary gear mechanism which is connected to the drive unit and of the rotational speed of that second element of the planetary gear mechanism which is connected at least indirectly to the turbine impeller,
- controlling of the transmission behaviour of the counter-rotating converter.

## Revendications

1. Dispositif de transmission de puissance (1) comprenant une entrée (E) destinée à être reliée à une machine d'entraînement qui peut fonctionner à vitesse de rotation constante et au moins une sortie (A) destinée à être reliée à une machine de travail (9) qui peut fonctionner à vitesse de rotation variable, ledit dispositif de transmission de puissance comprenant :
- un convertisseur de vitesse de rotation/couple hydrodynamique conçu comme un convertisseur contrarotatif (2) et comprenant au moins une roue à aubes de pompe (P), une roue à aubes de turbine (T) et un stator (L), lesquels forment un espace de travail pouvant être rempli de fluide de service ;
- une transmission à superposition (3) pourvue d'au moins une transmission à satellites (4), comprenant une couronne dentée (5), une roue solaire (6) et un porte-satellites (8) pourvu d'une pluralité de satellites (7) comme éléments de la transmission à satellites (4),
l'entrée (E) du dispositif de transmission de puissance (1) étant reliée au moins indirectement, de préférence directement, à la roue de pompe (P) du convertisseur contrarotatif (2) et à un premier élément de la transmission à satellites (4), la roue de turbine (T) du convertisseur contrarotatif (2) étant reliée au moins indirectement, de préférence directement, à un deuxième élément de la transmission à satellites (4) et un troisième élément de la transmission à satellites (4) étant relié au moins indirectement à la sortie (A) du dispositif de transmission de puissance (1) ou formant celle-ci ;
**caractérisé par** les caractéristiques suivantes :
- le convertisseur contrarotatif (2) peut être vidé ;
- un accouplement de régulation commutable (20, 16) étant prévu pour transmettre la puissance dans une première plage de vitesses de rotation, lorsque le convertisseur contrarotatif (2) est vidé, entre l'entrée (E) et la sortie (A) du dispositif de transmission de puissance (1) ;
- un moyen (25) étant prévu pour supporter et/ou fixer au moins indirectement le deuxième élément de la transmission à satellites (4), notamment la liaison (28) entre la roue de turbine (T) du convertisseur contrarotatif (2) et le deuxième élément de la transmission à satellites (4) dans cette première plage de vitesses de rotation.

2. Dispositif de transmission de puissance (1) selon la revendication 1,
**caractérisé en ce que**
le convertisseur contrarotatif (2), la transmission à superposition (3) et l'accouplement de régulation commutable (20, 16) sont disposés coaxialement les uns aux autres.

3. Dispositif de transmission de puissance (1) selon l'une des revendications 1 et 2,
**caractérisé en ce que**
vu dans la direction axiale entre l'entrée (E) et la sortie (A) du dispositif de transmission de puissance (1), le convertisseur contrarotatif (2) est disposé spatialement en amont de la transmission à superposition (3) et
l'accouplement de régulation commutable (20, 16) est disposé du côté du convertisseur contrarotatif (2) qui est opposé à la transmission à superposition (3),
un moyen de traversée d'entraînement (19) destiné à ponter celui-ci tout en établissant la liaison entre l'entrée (E) et la roue de pompe (P) du convertisseur contrarotatif (2) étant associé à l'accouplement de régulation (20).

4. Dispositif de transmission de puissance (1) selon l'une des revendications 1 et 2,
**caractérisé en ce que**
vu dans la direction axiale entre l'entrée (E) et la sortie (A) du dispositif de transmission de puissance (1), le convertisseur contrarotatif (2) est disposé spatialement en amont de la transmission à superposition (3) et l'accouplement de régulation (20, 16) est disposé du côté de la transmission à superposition (3) qui est opposé au convertisseur contrarotatif (2), la partie d'entrée (K1) de l'accouplement de régulation (20, 16) étant reliée au troisième élément de la transmission à superposition (3) et un moyen formant traversée d'entraînement (19) destiné à ponter celui-ci tout en établissant la liaison entre le troisième élément de la transmission à superposition (3) et la sortie (A) étant associé à l'accouplement de régulation (20).

5. Dispositif de transmission de puissance (1) selon la revendication 4,
**caractérisé en ce que**
la partie de sortie (K2) de l'accouplement de régulation (20, 16) est reliée à la sortie du dispositif de transmission de puissance (1) par le biais d'un moyen formant convertisseur de vitesse de rotation/couple (22), en particulier d'un train de roues droites.

6. Dispositif de transmission de puissance (1) selon l'une des revendications 2 à 5,
**caractérisé en ce que**
le moyen formant traversée d'entraînement (19) est formé en concentration fonctionnelle avec l'accouplement de régulation (20, 16).

7. Dispositif de transmission de puissance (1) selon l'une des revendications 1 à 6,
**caractérisé en ce que**
l'accouplement de régulation est conçu comme un embrayage multidisque régulable.

8. Dispositif de transmission de puissance (1) selon l'une des revendications 1 à 6,
**caractérisé en ce que**
l'accouplement de régulation (20) est conçu comme un accouplement hydrodynamique régulable (16), en particulier un accouplement hydrodynamique pourvu d'une commande de remplissage.

9. Dispositif de transmission de puissance (1) selon l'une des revendications 1 à 8,
**caractérisé en ce que**
le moyen (25) destiné à supporter et/ou fixer le deuxième élément de la transmission à satellites (4), en particulier la liaison (28) entre la roue de turbine (T) du convertisseur contrarotatif (2) et la transmission à superposition (3) est conçu comme un moyen de freinage, en particulier un ralentisseur hydrodynamique (31), le rotor (R) étant relié directement à la roue de turbine (T) du convertisseur contrarotatif (2) ou à la liaison (28) entre la roue de turbine (T) et le deuxième élément de la transmission à satellites (4) et le stator (S) étant relié à un composant fixé au boîtier ou au premier élément de la transmission à satellites (4).

10. Dispositif de transmission de puissance (1) selon l'une des revendications 1 à 8,
**caractérisé en ce que**
le moyen (25) destiné à supporter et/ou fixer le deuxième élément de la transmission à satellites (4), en particulier la liaison (28) entre la roue de turbine (T) du convertisseur contrarotatif (2) et la transmission à superposition (3) est conçu comme un moyen d'accouplement (32) comprenant au moins deux parties d'accouplement (K1, K2) qui peuvent être reliées fonctionnellement au moins indirectement l'une à l'autre, une première partie d'accouplement (32.1) étant reliée directement à la roue de turbine (T) du convertisseur contrarotatif (2) ou à la liaison (28) entre la roue de turbine (T) et le deuxième élément de la transmission à satellites (4) et la deuxième partie d'accouplement (K2) étant reliée à un composant, fixé au boîtier, ou au premier élément de la transmission à satellites (4).

11. Dispositif de transmission de puissance (1) selon l'une des revendications 1 à 10,
**caractérisé en ce que**
la transmission à superposition (3) comprend une seule transmission à satellites (4) et le premier élément de la transmission à satellites (4) est formé par la nervure (8), le deuxième élément de la transmission à satellites (4) est formé par la roue solaire (6) et le troisième élément de la transmission à satellites (4) est formé par la couronne dentée (5).

12. Dispositif de transmission de puissance (1) selon l'une des revendications 1 à 11,
**caractérisé en ce que**
le convertisseur contrarotatif (2) est conçu comme un convertisseur réglable comprenant des aubes réglables ou des segments d'aube réglables sur l'au moins une des roues à aubes : la roue de pompe, la roue de turbine et/ou le stator.

13. Chaîne cinématique (10) comprenant une machine d'entraînement (9) pouvant fonctionner à vitesse de rotation constante et un dispositif de transmission de puissance (1) selon l'une des revendications 1 à 12 pour entraîner une machine de travail (11) à vitesse de rotation variable.

14. Procédé de fonctionnement d'un dispositif de transmission de puissance (1) selon l'une des revendications 1 à 12, le procédé comprenant les étapes de procédé suivantes :
- démarrer la machine d'entraînement depuis l'arrêt, lorsque le convertisseur de vitesse de rotation/couple hydrodynamique est vidé, jusqu'à atteindre une grandeur prédéfinie qui caractérise au moins indirectement le mode de fonctionnement de la machine d'entraînement, en particulier la vitesse de rotation nominale de celle-ci,
- en même temps que la grandeur prédéfinie qui caractérise au moins indirectement le mode de fonctionnement de la machine d'entraînement, notamment la vitesse de rotation nominale, est atteinte, ou de manière décalée dans le temps après avoir atteint cette grandeur, mettre en circuit ou mettre en marche l'accouplement de régulation, notamment l'accouplement hydrodynamique, et supporter ou fixer le deuxième élément, en particulier la roue solaire de la transmission à satellites de la transmission à superposition
- commander le comportement en transmission de l'accouplement de régulation dans une première plage de vitesses de rotation prédéfinie
- lors de l'épuisement de la plage de vitesses prédéfinie, ponter l'accouplement de régulation et désactiver le moyen de support et/ou de fixation et remplir le convertisseur de vitesse de rotation/couple hydrodynamique et entraîner la roue de turbine
- entraîner le troisième élément de la transmission à satellites à une vitesse de rotation qui résulte d'une superposition, définie par la transmission à satellites, de la vitesse de rotation du premier élément, relié à la machine d'entraînement, de la transmission à satellites et de la vitesse de rotation du deuxième élément, relié au moins indirectement à la roue de turbine, de la transmission à satellites,
- commander le comportement en transmission du convertisseur contrarotatif.
